# EUROPÄISCHE PATENTANMELDUNG

(11) **EP 2 258 956 A1**
(43) Veröffentlichungstag der Anmeldung: **08.12.2010**
(21) Anmeldenummer: 10005332.1
(22) Anmeldetag: 21.05.2010
(51) Int. Cl.: F16B 41/00, H01R 4/30

(54) **Befestigungseinrichtung mit mindestens einer unverlierbaren Befestigungsschraube**

(30) Priorität: 06.06.2009 DE 202009007939 U
(71) Anmelder: Harting Electric GmbH & Co. KG, 32339 Espelkamp (DE)
(72) Erfinder: Schlegel, Bernard, 32369 Rahden (DE); Griepenstroh, Sebastian, 32369 Rahden (DE)

(57) **Zusammenfassung**

Für eine Befestigungsvorrichtung mit mindestens einer von einer Befestigungsschraube (2) durchgriffenen, in einem Flansch (11) befindlichen Befestigungsöffnung (12) wird vorgeschlagen, den Flansch am Rand der Befestigungsöffnung mit mindestens einem Schlitz (13,13') zu versehen. Weiterhin ist der Durchmesser der Befestigungsöffnung kleiner als der Außendurchmesser des Schraubengewindes (23) der Befestigungsschraube (2). Somit werden die elastischen Materialeigenschaften des Flansches besonders vorteilhaft ausgenutzt, da ein bestimmter Kraftaufwand notwendig ist, um die Befestigungsschraube in die Befestigungsöffnung hinein- oder aus der Befestigungsöffnung herauszuschrauben. Dadurch wird sichergestellt, dass sich die Befestigungsschraube auch bei lang andauernden Vibrationen nicht ohne weiteres aus der Befestigungsöffnung löst, also unverlierbar in der Befestigungsöffnung gehalten ist. Dies ist insbesondere von großer Bedeutung, wenn die Befestigungseinrichtung ein zu einem Steckverbinder gehörendes Erdungselement umfasst, das den besagten Flansch aufweist, und das dafür vorgesehen ist, in einen lsolierkörper eingerastet zu werden und zusammen mit diesem Isolierkörper zur Montage zu einem Steckverbindergehäuse transportiert zu werden.

## Beschreibung

Die Erfindung betrifft eine Befestigungsvorrichtung, umfassend einen Flansch und mindestens eine Befestigungsschraube mit einem Schraubengewinde, wobei der Flansch mindestens eine Befestigungsöffnung mit einem vorgegebenen Durchmesser aufweist, und wobei die Befestigungsschraube die Befestigungsöffnung durchgreift.

Eine derartige Befestigungseinrichtung dient dazu, Befestigungsschrauben bis zur endgültigen Montage in der jeweiligen Befestigungsöffnung zu halten. Insbesondere umfasst eine derartige Befestigungseinrichtung ein zu einem Steckverbinder gehörendes Erdungselement, das einen solchen Flansch aufweist. Ein solches Erdungselement ist dafür vorgesehen, in einen Isolierkörper eingerastet und zusammen mit dem Isolierkörper zur Montage zu einem Steckverbindergehäuse transportiert zu werden. Dabei ist es gewünscht, dass die mindestens eine Befestigungsschraube unverlierbar in der Befestigungsöffnung des Flansches gehalten ist und somit während des Transports nicht abhanden kommt.

### Stand der Technik

Im Stand der Technik ist es beispielsweise aus der Druckschrift DE10310164 bekannt, eine Befestigungsschraube unverlierbar an einem Kabelschuh zu halten. Dabei weist die Befestigungsschraube einen unterseitig an einem Schraubkopf anschließenden gewindefreien, eine Befestigungsöffnung des Kabelschuhs durchgreifenden Halteabschnitt und einen an den Halteabschnitt grenzenden Gewindeabschnitt auf.

Es ist beispielsweise aus der Druckschrift DE29901497U1 bekannt, das Herausdrehen einer Schraube z.B. durch Auftragen einer weichen Kunststoffschicht im Gewindebereich der Schraube zu verhindern. Bei einer mehrmaligen Montage dieser Schraube schert jedoch zumindest ein Teil der Schicht ab, so dass die Funktion der Unverlierbarkeit nicht immer gewährleistet ist.

Es ist weiterhin aus der Druckschrift DE29901497U1 bekannt, die Bewegungshemmung in den Gewindebereich eines Befestigungsflansches einzubringen, in dem dieser ein nicht voll geschnittenes Gewinde aufweist. Die eingesetzte Befestigungsschraube übernimmt hier erst bei der Montage die Schneidfunktion eines Gewindebohrers für den restlichen Gewindeteil. Dazu sind jedoch Schrauben mit einer entsprechenden Materialhärte nötig.

Weiterhin schlägt die Druckschrift DE29901497U1 vor, neben der Gewindebohrung des Befestigungsflansches eine Einprägung anzubringen, wodurch der Durchmesser der Gewindebohrung verengt ist.

Leider hat sich gezeigt, dass diese bekannten Vorrichtungen, die auf dem Einschrauben einer Befestigungsschraube in ein Innengewinde einer Befestigungsöffnung nicht immer den gewünschten Zweck erfüllen, weil sich die Befestigungsschrauben durch Vibration beim Transport aus den jeweiligen Befestigungsöffnungen lösen.

### Aufgabenstellung

Der Erfindung liegt daher die Aufgabe zugrunde, eine mit geringem Aufwand herstellbare Befestigungsvorrichtung der Eingangs erwähnten Art anzugeben, die sicherstellt, dass sich eine Befestigungsschraube auch bei lang andauernder Vibration aus einer Befestigungsöffnung, insbesondere aus der Befestigungsöffnung eines zur Befestigungsvorrichtung gehörenden Erdungselements nicht löst.

Diese Aufgabe wird dadurch gelöst, dass der Flansch an der Befestigungsöffnung mindestens einen Schlitz aufweist, wobei der Schlitz dafür vorgesehen ist, bei einem Einbringen des Schraubengewindes in die Befestigungsöffnung elastisch erweitert zu werden, und dass das Schraubengewinde einen Außendurchmesser aufweist, der größer ist als der Durchmesser der Befestigungsöffnung.

Vorteilhafte Ausgestaltungen der Erfindung sind in den Ansprüchen 2-4 angegeben.

Bei der Erfindung handelt es sich um eine Vorrichtung, die geeignet ist, sicherzustellen, dass beim Entfernen einer Befestigungsschraube aus einer Befestigungsöffnung durch eine reversible Verformung des Schlitzes und damit des Flansches jeweils eine gewisse Kraft aufgewendet werden muss, wobei diese Kraft unter anderem durch die Form des Schlitzes und die elastischen Materialeigenschaften des Flansches vorgegeben ist. Somit können sich die Befestigungsschrauben selbst bei beliebig lang andauernden Vibrationen aus ihren jeweiligen Befestigungsöffnungen nicht lösen.

Die elastischen Eigenschaften des Materials des Flansches werden durch das Vorhandensein des Schlitzes somit besonders vorteilhaft genutzt.

Ein mit der Erfindung erzielter Vorteil besteht darin, dass die Befestigungsschrauben beim Transport nicht abhanden kommen.

Die Oberfläche der Befestigungsschraube und/oder der Befestigungsöffnung wird bei der Montage nicht beschädigt.

Bei Bedarf kann die Befestigungsschraube durch die elastische Verformung des Schlitzes auch wieder herausgedreht werden, ohne dass die Befestigungsschraube oder der Flansch, insbesondere im Bereich der Befestigungsöffnung irreversibel verändert bzw. beschädigt werden.

Die Bewegungshemmung ist dementsprechend auch bei weiteren Montage- bzw. Demontagevorgängen annähernd gleich.

In einer Ausbildungsform weist die Befestigungsschraube einen gewindefreien Schaftabschnitt sowie einen daran anschließenden Gewindeabschnitt mit dem Schraubengewinde auf. Der gewindefreie Schaftabschnitt ist dafür vorgesehen, die Befestigungsöffnung zu durchgreifen und besitzt einen Durchmesser, der kleiner ist als der Außendurchmesser des Schraubengewindes. In einer weiteren Ausbildungsform ist der Durchmesser des Schaftabschnitts kleiner als der Durchmesser der Befestigungsöffnung.

In einer Ausbildungsform weist die Befestigungsöffnung ein Innengewinde auf. Dabei ist der Außendurchmesser des Innengewindes kleiner als der Außendurchmesser des Schraubengewindes und/oder der Innendurchmesser des Innengewindes ist kleiner als der Innendurchmesser des Schraubengewindes, wodurch das Innengewinde dazu geeignet ist, das Einschrauben der Befestigungsschraube unter einer elastischen Erweiterung des Schlitzes durch einen entsprechenden Kraftaufwand zu ermöglichen.

In einer anderen Ausbildungsform wird die Befestigungsschraube durch einen Befestigungsstift ersetzt. Dieser Befestigungsstift unterscheidet sich von der Befestigungsschraube dadurch, dass er an einem verbreiterten Abschnitt kein Gewinde aufweist. Die Befestigungsöffnung weist in diesem Fall ebenfalls kein Gewinde auf. Der Durchmesser des verbreiterten Abschnitts des Befestigungsstifts ist dann größer als der Durchmesser der Befestigungsöffnung.

### Ausführungsbeispiel

Ein Ausführungsbeispiel der Erfindung ist in der Zeichnung dargestellt und wird im folgenden näher erläutert. Es zeigen:
Fig. 1 ein Erdungselement mit Flansch, Befestigungsöffnung und Schlitz,
Fig. 2 eine Befestigungsschraube, und
Fig. 3 einen Befestigungsstift.

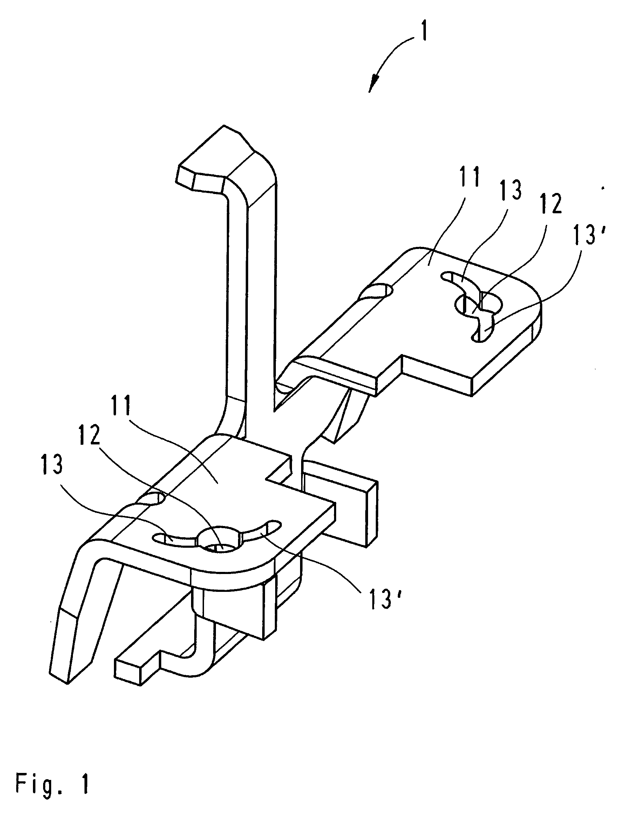

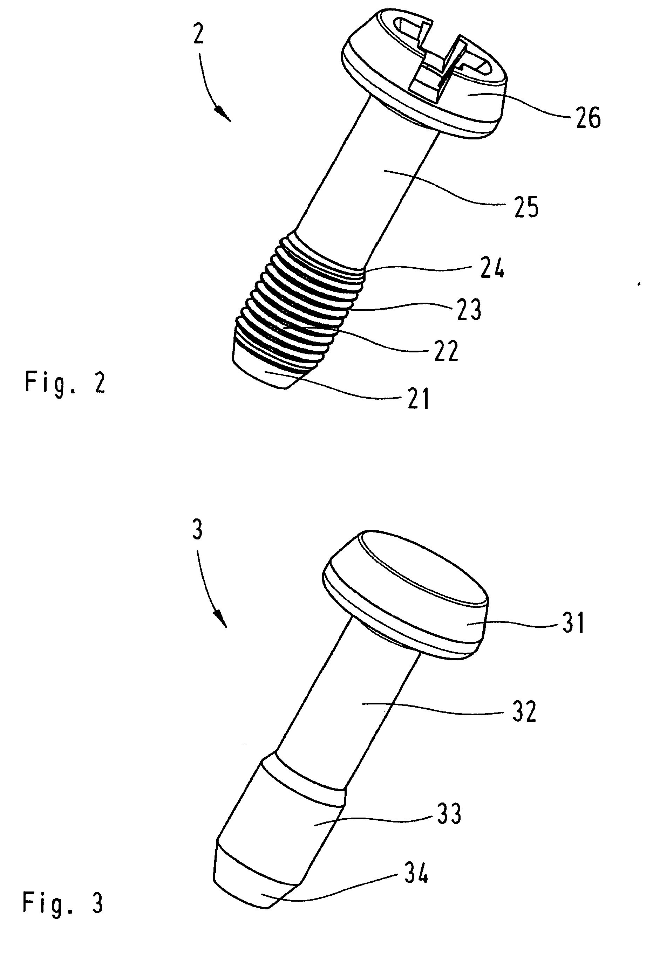

In der Fig. 1 ist ein Erdungselement (1) eines Steckverbinders dargestellt. Dieses Erdungselement (1) bildet zusammen mit einer in Fig. 2 dargestellten Befestigungsschraube (2) eine Befestigungsvorrichtung. Das Erdungselement (1) ist dafür vorgesehen, in einen ebenfalls zum Steckverbinder gehörenden, aber nicht in der Zeichnung dargestellten Isolierkörper eingerastet und zusammen mit diesem Isolierkörper zur Montage zu einem ebenfalls nicht dargestellten Steckverbindergehäuse transportiert zu werden. Das Erdungselement (1) weist zwei Flansche (11) mit je einer Befestigungsöffnung (12) und zwei am Rand der Befestigungsöffnung (12) in radialer Richtung angeordnete, kreisbogenförmig verlaufende Schlitze (13, 13') auf.

Die in Fig. 2 dargestellte Befestigungsschraube (2) weist eine trapezförmige Kuppe (21), einen Gewindeabschnitt (22) mit einem Gewinde (23), einen Gewindeauslauf (24), einen Schaftabschnitt (25) und einen Schraubkopf (26) auf.

Die trapezförmige Kuppe (21) der Befestigungsschraube (2) dient der leichten Einführung der Befestigungsschraube (2) in die Befestigungsöffnung (12) des Erdungselements (1). Der Außendurchmesser des Gewindes (23) der Befestigungsschraube (2) ist größer als der Durchmesser der Befestigungsöffnung (12). Die Schlitze (13,13') dienen dazu, die elastischen Eigenschaften des Materials des Flansches (11) besonders vorteilhaft auszunutzen und somit ein Einbringen, insbesondere ein Einschrauben der Befestigungsschraube (2) nur unter einem vorgegebenen Kraftaufwand zu ermöglichen. Da das Material des Flansches (11) dabei ausschließlich im elastischen Bereich beansprucht wird, ist zum Lösen der Befestigungsschraube (2) ein vergleichbarer Kraftaufwand erforderlich. Somit kann sich die Befestigungsschraube (2) nicht ausschließlich durch Vibrationen lösen.

Weiterhin ist auch eine Variante vorgesehen, bei der die Befestigungsschraube (2) durch einen in der Fig. 3 dargestellten Befestigungsstift (3) ersetzt wird, wobei der Befestigungsstift (3) einen Stiftkopf (31), einen am Stiftkopf (31) anschließenden gewindefreien Stiftschaftabschnitt (32) und einen an den Stiftschaftabschnitt (32) anschließenden gewindefreien verbreiterten Abschnitt (33) mit einer trapezförmigen Stiftkuppe (34) aufweist.

Dabei weist der Flansch mindestens eine Befestigungsöffnung (12) mit einem vorgegebenen Durchmesser auf. Der Befestigungsstift (3) durchgreift diese Befestigungsöffnung (12).

Der Flansch (11) weist auch in dieser Variante am Rand seiner Befestigungsöffnung (12) mindestens einen Schlitz (13,13') auf, wobei der Schlitz (13,13') dafür vorgesehen ist, beim Einbringen des Befestigungsstiftes (3) in die Befestigungsöffnung (12) elastisch erweitert zu werden. Der verbreiterte Abschnitt (33) des Stiftes besitzt dabei einen Durchmesser, der größer ist als der Durchmesser der Befestigungsöffnung (12).

Der Stiftschaftabschnitt (32) weist dabei einen Radius auf, der kleiner ist als der Durchmesser der Befestigungsöffnung (12).

## Patentansprüche

1. Befestigungsvorrichtung, umfassend einen Flansch (11) und mindestens eine Befestigungsschraube (2) mit einem Schraubengewinde (23), wobei der Flansch mindestens eine Befestigungsöffnung (12) mit einem vorgegebenen Durchmesser aufweist, und wobei die Befestigungsschraube (2) die Befestigungsöffnung (12) durchgreift, **dadurch gekennzeichnet,**
**dass** der Flansch (11) an der Befestigungsöffnung (12) mindestens einen Schlitz (13,13') aufweist, wobei der Schlitz (13,13') dafür vorgesehen ist, bei einem Einbringen des Schraubengewindes (23) der Befestigungsschraube (2) in die Befestigungsöffnung (12) elastisch erweitert zu werden, und dass das Schraubengewinde (23) einen Außendurchmesser aufweist, der größer ist als der Durchmesser der Befestigungsöffnung (12).

2. Befestigungsvorrichtung nach Anspruch 1, **dadurch gekennzeichnet, dass** die Befestigungsöffnung (12) ein Innengewinde aufweist, das dafür vorgesehen ist, ein Einschrauben des Schraubengewindes (23) der Befestigungsschraube (2) unter der elastischen Erweiterung des Schlitzes (13,13') durch einen entsprechenden Kraftaufwand zu ermöglichen.

3. Befestigungsvorrichtung nach einem der Ansprüche 1 bis 2, **dadurch gekennzeichnet,**
**dass** die Befestigungsschraube einen Schraubkopf (26), einen an dem Schraubkopf (26) anschließenden gewindefreien Schaftabschnitt (25), welcher dafür vorgesehen ist, die Befestigungsöffnung (12) zu durchgreifen, und einen an den Schaftabschnitt (25) anschließenden mit dem Schraubengewinde (23) versehenen Gewindeabschnitt (22) aufweist.

4. Befestigungsvorrichtung nach Anspruch 3, **dadurch gekennzeichnet, dass** der gewindefreie Schaftabschnitt (25) einen Durchmesser aufweist, der kleiner ist, als der Außendurchmesser des Schraubengewindes (23).
